# NEW EUROPEAN PATENT SPECIFICATION

(11) **EP 1 268 702 B2**
(45) Date of publication and mention of the opposition decision: **23.09.2009**
(45) Mention of the grant of the patent: 14.09.2005
(21) Application number: 01910570.9
(22) Date of filing: 12.02.2001
(51) Int. Cl.: C09J 189/00, C08L 97/02, C08L 89/00

(54) **VEGETABLE PROTEIN ADHESIVE COMPOSITIONS**
KLEBSTOFFZUSAMMENSETZUNGEN AUS PFLANZLICHEM PROTEIN
COMPOSITIONS ADHESIVES A BASE DE PROTEINE VEGETALE

(30) Priority: 11.02.2000 US 181938 P
(43) Date of publication of application: 02.01.2003
(73) Proprietor: Heartland Resource Technologies LLC, Oelwein, IA 50662 (US)
(72) Inventor: TROCINO, Frank, S., Bellingham, WA 98225 (US)
(74) Representative: Gallagher, Kirk James
(86) International application number: PCT/US2001/004476
(87) International publication number: WO 2001/059026

(56) References cited:
- BE-A- 425 585
- US-A- 2 441 946
- US-A- 4 201 700
- DATABASE CHEMABS [Online] chemical abstracts service, columbus, ohio, us; retrieved from STN Database access no. 51:79307 , IACHAN ABRAHAO ET AL.: "Utilization of residues of proteinic nature. I. New process of plastification of proteins." XP002172009 & REV. QUIM. IND. , vol. 25, no. 295, 1956, pages 13-17, Rio de Janeiro
- DATABASE CHEMABS [Online] chemical abstracts service, columbus, ohio, us; Retrieved from STN Database access n°. 46:50661, HAGIWARA AKIMASA ET AL.: "Adhesive film from animal and vegetable proteins" XP002172016 & JP 25 000871 A (HONEN OIL MANUFACTURING CO.) 31 March 1950 (1950-03-31)
- L.LORENTZ ET AL: ' The effect of soya protein additions on the reactivity and formaldehyde emissions of urea-formaldehyde adhesive resins' FOREST PRODUCTS JOURNAL vol. 49, no. 3, 01 March 1999, pages 73 - 78

## Description

### Related Application

This application claims priority from U.S. Provisional Application Number 60/181,938 filed February 11, 2000.

### Field of the Invention

Soy protein-based adhesive compositions and methods for preparing them are provided. The adhesives are prepared by copolymerizing denatured soy protein that has been functionalized with methylol groups and at least one co-monomers selected from the group consisting of dimethylol urea, tetramethylol ketone, and trimethylol melamine. Preferred soy protein includes hydrolyzed soy protein obtained from soy meal.

### Background of the Invention

Ancient adhesive raw material choices were limited. Starch, blood and collagen extracts from animal bones and hides were the early sources. Somewhat later, the range of raw materials used in adhesives was expanded to include milk protein and fish extracts. These early starch and protein-based adhesives suffered from a number of drawbacks. They generally lacked durability, and were able to maintain long-term strength only as long as they were kept dry.

Adhesives based on soyflour first came into general use during World War 1. To obtain suitable soyflour for use in these early adhesives, the oil had to be extracted from soybean meal and the meal ground into to extremely fine flour. These early soybean adhesives suffered from the same drawbacks as other early protein-based adhesives, and their use was strictly limited to interior applications.

In the 1920's, phenol-formaldehyde and urea-formaldehyde resins were first developed. Phenol-formaldehyde and urea-formaldehyde resins are exterior-durable, in contrast to the protein-based adhesives, such as the early soyflour adhesives, in use at that time. The phenol-formaldehyde and urea-formaldehyde resins, also referred to as "thermoset" polymeric adhesives, suffered from a number of drawbacks, the foremost of which was the high cost of raw materials. These adhesives did, however, demonstrate superior durability when compared to the early protein-based adhesives. World War II perpetuated the rapid development of these adhesives for water and weather resistant applications, such as exterior applications. The low cost protein-based adhesives continued to be used in interior applications, however.

After World War II, the petrochemical industry invested vast sums of money in research and development to create and expand new markets for petrochemicals. Within several years, the costly raw materials used in manufacturing thermoset adhesives became inexpensive bulk commodity chemicals. In the 1960's, the price of petrochemical-based adhesives had become so low that they displaced protein adhesives out of their markets.

### Summary of the Invention

Over the past several years, the cost of petrochemicals used as raw materials in thermoset resins have risen to the point where protein-based adhesives can compete in the same markets that are today enjoyed by the thermoset adhesives. A protein-based adhesive that combines the cost benefits of proteins as a raw material with the superior exterior durability characteristics of thermoset adhesives is therefore desirable. In accordance with the present invention, a low cost soybean-based adhesive suitable for exterior uses is provided. The adhesive is prepared by copolymerizing hydrolyzed soybean protein and co-monomers selected from the group consisting of dimethylol urea, tetramethylol ketone, and trimethylol melamine currently used in thermoset adhesives.

In a first embodiment of the present invention, an adhesive is provided, the adhesive including a copolymer of a soy protein having a plurality of methylol groups and at least one co-monomer selected from the group consisting of dimethylol urea, tetramethylol ketone, and trimethylol melamine.

In one aspect of the first embodiment, the soy protein comprises, for example hydrolyzed soy protein.

In another aspect of the first embodiment, a soymeal having a protein content of from about 40 wt. % to about 50 wt. % and an oil content of less than about 11 wt. % includes the soy protein.

In yet another aspect of the first embodiment, a composite board includes the adhesive.

In a second embodiment of the present invention, a method of preparing an adhesive is provided, the method including the steps of providing a denatured soy protein; functionalizing the denatured soy protein with a plurality of methylol groups, thereby yielding a methylolated soy protein; providing a co-monomer selected from the group consisting of dimethylol urea, tetramethylol ketone, and trimethylol melamine; preparing a solution comprising the methylolated soy protein and the co-monomer; maintaining the solution at an elevated temperature, whereby the methylolated soy protein and the co-monomer polymerize; and recovering an adhesive, the adhesive comprising the polymerization product of the methylolated soy protein and the co-monomer.

In an aspect of the second embodiment, the step of providing a hydrolyzed soy protein includes the steps of providing a plurality of soybeans, the soybeans comprising a soy protein; processing the soybeans into soymeal; and hydrolyzing the soy protein. The step of processing the soybeans into soymeal may include subjecting the soybeans to a process selected from the group consisting of solvent extraction, extrusion, and expansion/expelling; and recovering a soymeal.

In a further aspect of the second embodiment, the step of denaturing the soy protein includes the steps of forming an aqueous, alkaline solution of the soy protein; and maintaining the solution at an elevated temperature, thereby producing a denatured soy protein. The step of forming an aqueous, alkaline solution of the soy protein may include forming an aqueous, alkaline solution of the soy protein and a phase transfer catalyst, such as polyethylene glycol, a quaternary ammonium compound, and tris(dioxa-3,6-heptyl)amine. The step of forming an aqueous, alkaline solution of the soy protein may also include forming an aqueous, alkaline solution of the soy protein and an antioxidant, such as tertiary butylhydroquinone and butylated hydroxyanisone. The step of forming an aqueous, alkaline solution of the soy protein may include forming an aqueous, alkaline solution of the soy protein and urea.

In yet another aspect of the second embodiment, the step of functionalizing the denatured soy protein with a plurality of methylol groups, thereby yielding a methylolated soy protein includes the reacting the denatured soy protein with formaldehyde in a basic solution at elevated temperature, thereby yielding a methylolated soy protein.

In yet a further aspect of the second embodiment, the step of providing a co-monomer having a plurality of methylol groups comprising the steps of providing a compound selected from the group consisting of urea, acetone, and melamine; and reacting the compound with formaldehyde in a basic solution at elevated temperature, thereby yielding a co-monomer having a plurality of methylol groups. The step of functionalizing the denatured soy protein with a plurality of methylol groups and the step of providing a co-monomer having a plurality of methylol groups may be conducted in a single reaction mixture.

In yet another aspect of the second embodiment, the step of maintaining the solution at an elevated temperature, whereby the methylolated soy protein and the co-monomer polymerize includes maintaining the solution at an elevated temperature, whereby a methylol group of the soy protein and a methylol group of the co-monomer undergo a condensation reaction such that a water molecule is liberated and a reactive ether linkage is formed, the ether linkage reacting such that a formaldehyde group is liberated and a methylene bridge is formed. The step of maintaining the solution at an elevated temperature may also include maintaining the solution at an elevated temperature, whereby a hydroxyl group of the soy protein and a methylol group of the co-monomer undergo a condensation reaction such that a water molecule is liberated and a reactive ether linkage is formed, the ether linkage reacting such that a formaldehyde group is liberated and a methylene bridge is formed. The step of maintaining the solution at an elevated temperature may also include maintaining the solution at an elevated temperature, whereby an amine group of the soy protein and a methylol group of the co-monamer undergo a condensation reaction such that a water molecule is liberated and a methylene bridge is formed.

In yet another aspect of the second embodiment, the method further includes the step of providing a solid substance; mixing the solid substance with the solution; and recovering a composite. The composite may include a fiberboard. The solid substance may include an agricultural material, such as corn stalk fiber, poplar fiber, wood chips, and straw.

### Detailed Description of the Preferred Embodiment

The following description and examples illustrate a preferred embodiment of the present invention in detail. Those of skill in the art will recognize that there are numerous variations and modifications of this invention that are encompassed by its scope. Accordingly, the description of a preferred embodiment should not be deemed to limit the scope of the present invention.

The present invention discloses the copolymerization of soybean protein and methylolated compounds. Suitable compounds are selected from methylolated urea, melamine and acetone. The adhesives may be prepared using the methylolated compounds as raw materials, or else suitable compounds may be methylolated via reaction with formaldehyde as a step in the process of preparing the adhesive.

In the past, the value of crosslinking formaldehyde with a protein was to insolubilize and resinify the protein. Formaldehyde also improves the solubility and stability of the protein in the dissolved state. The adhesives of the preferred embodiments are based on a soluble protein. The soluble protein is reacted with formaldehyde to form methylol derivatives. Methylolated proteins react with other methylolated compounds to form thermoset resins. These thermoset resins are then crosslinked to form exterior resins.

Urea and melamine, along with formaldehyde, are the basic reagents that form the common amino resins. Three reactions are involved in the formation of the resins: methylolation, condensation and methylene bridge formation. In the methylolation reaction, formaldehyde reacts with urea and melamine in the presence of an acid or base catalyst to add a methylol group to each of the molecule's primary amine groups. The secondary and primary amine groups of proteins also undergo methylolation with formaldehyde in the presence of an acid or base catalyst. In the condensation reaction, water is liberated to form a polymer chain or network. This is referred to as methylene bridge formation:

RNH-CH₂OH + H₂NR → RNH-CH₂NH-R + H₂O

The condensation and methylene bridge formation steps result in the polymerization and crosslinking of the methylolated molecules.

### The Soy Protein

One of the components of the adhesives is a protein obtained from soybeans. The soybean plant belongs to the legume family. The protein content of the soybeans is typically about 40 wt. %. After the hulls and the oil are removed from the soybean ("defatting"), the resulting product, referred to as defatted soymeal, typically has a protein content of about 40 wt. % to about 50 wt. %.

Soy meal is typically obtained from soybeans by separating all or a portion of the oil from the soybean. Soy meal is typically obtained from soybeans by solvent extraction, extrusion or expelling/expansion methods.

In solvent extraction methods, soybeans entering the processing plant are screened to remove damaged beans and foreign materials, and are then comminuted into flakes. The soybean oil is removed from the flakes by extraction with a solvent, such as hexane. Suitable extraction apparatus are well known in the art and may include, for example, countercurrent extractors. After the defatted flakes leave the extractor, any residual solvent is removed by heat and vacuum. Soymeal produced by solvent extraction methods contains essentially no oil and about 40 to 50 wt. % protein.

In extrusion methods, after the soybeans are screened and flaked, the flakes are heated under conditions of pressure and moisture in an extrusion apparatus. Suitable extrusion apparatus are well known in the art, including, for example, horizontal screw extrusion devices. Soymeal from extrusion methods typically contains about 5-9% oil and about 40-48% protein. In preferred embodiments, soybeans defatted in an extrusion process are preferred because of their lower cost and because the small amount of oil left in the soymeal improves the moisture resistance of the adhesive. However, soybeans defatted in a solvent extraction process or any other process are also suitable for use in the adhesives of the preferred embodiments.

Another method for producing soymeal is the expansion/expelling method. This method has gained in popularity over other methods because of the quality of the byproducts produced, as well as the freedom from environmental hazards associated with solvent extraction methods. In the expansion/expelling method, the raw soybeans are fed through a series of augers, screeners, and controlled rate feeders into the expanders. The internal expander chambers and grinders create extreme temperature and pressure conditions, typically from about 375 to about 425 psi. The oil cells of the bean are ruptured as the product, in slurry form, exits the expander and the pressure drops down to atmospheric pressure. The high frictional temperature, typically between about 150°C to about 177°C, cooks the meal and oil, yielding a high quality product. About half of the 12% moisture present in the raw soybean is released as steam as the slurry exits the expander. The water and steam mix inside the expander, keeping the slurry fluid as well as aiding in the cooking process. The hot soymeal slurry is then fed to a continuous oil expeller. The meal is squeezed under pressure and the free oil is expelled. The oil and the meal are then separated and recovered. The soymeal exits the press as both a dry powder and chunks, which can be milled with a hammermill to an acceptable bulk density and consistency. The product may then be passed through a cooler where heat is extracted. The final expanded/expelled soymeal typically contains about 7 to 11 % oil and about 42 to 46 % protein, on a dry matter basis. Solvent extraction of the meal produces a product typically containing less than about 0.1% oil and about 48% protein.

To produce a soymeal suitable for use in the adhesives of the preferred embodiments, it is ground into fine flour. Typically, the dry extracted meal is ground so that substantially all of the flour passes through a 65 mesh screen.

In preferred embodiments, the soymeal contains about 44 wt. % or more protein. However, soymeals with lower protein content may also be suitable in certain embodiments. Soymeal having various oil contents may be used in preferred embodiments.

The soy protein in soymeal is a globular protein consisting of a polypeptide chain made up of amino acids as monomeric units. Proteins typically contain 50 to 1000 amino acids residues per polypeptide chain. The amino acids are joined by peptide bonds between the alpha-carboxyl groups and the alpha-amino groups of adjacent amino acids, wherein the alpha-amino group of the first amino acid residue of the polypeptide chain is free. The majority of amino acid residues in proteins tend to be hydrophobic, and as such are not very water-soluble. The molecular structures of soy proteins contain a hydrophobic region that is enclosed within a hydrophilic region, so that many of the polar groups are unavailable. The globular shape of proteins in aqueous solution is a consequence of the fact that the proteins expose as small a surface as possible to the aqueous solvent so as to minimize unfavorable interactions with the water and maximize favorable interactions of the amino acid residues with each other. The conformation of the protein is maintained by disulfide bonds and by non-covalent forces, such as van der Waals interactions, hydrogen bonds, and electrostatic interactions.

When a protein is treated with a denaturant, the conformation is lost because the denaturant interferes with the forces maintaining the configuration. The result is that more polar groups of the protein are available for reaction. In preparing the adhesives of the preferred embodiments, the soy protein is first denatured. Any suitable denaturants as are well known in the art, for example, organic solvents, detergents, concentrated urea solutions, or even heat, may be used to denature the soy protein. However, in preferred embodiments, alkali or acid treatments at elevated temperatures are used to denature the protein by breaking hydrogen bonds, that is, by hydrolyzing the protein.

The denaturing of the protein is preferably performed as a separate step, however, in certain embodiments it may be conducted by adding urea or another denaturant to the soy protein methylolation reaction mixture. In preferred embodiments, a phase transfer catalyst is added to the denaturing reaction mixture. The phase transfer catalyst serves to enhance the rate of reaction occurring in a two phase organic-aqueous system by catalyzing the transfer of water soluble reactants across the interface to the organic phase. Suitable phase transfer catalysts include polyethylene glycol, quaternary ammonium compounds, and the like. In a preferred embodiment, the phase transfer catalyst is tris(dioxa-3,6-heptyl)amine, commonly referred to as Thanamine or TDA-1 (available from Rhodia, Inc. of Cranbury, New Jersey). In various embodiments, it is preferred to add a component to the reaction mixture that enhances the solubility of the protein, thereby facilitating the denaturing reaction. Certain antioxidants, including tertiary-butylhydroquinone (TBHD) and butylated hydroxyanisone (BHA), are observed to increase the solubility of soy protein, however, other suitable solubility enhancers may also be used.

Because of its low cost, it is preferred to use soymeal as the source of soy protein in the adhesives of the preferred embodiments.

### The Co-Monomer(s)

To prepare the adhesives of the preferred embodiments, the soy protein and one or more co-monomers are polymerized. In order for the polymerization reaction to occur, the soy protein is first subjected to methylolation. If the co-monomers do not already contain methylol groups, they too are subjected to methylolation prior to the polymerization reaction. The co-monomers are selected from dimethylol urea, trimethylol melamine and tetramethylol ketone.

A single co-monomer or mixtures of two or more co-monomers may be used in the adhesives of the preferred embodiments. Different co-monomers possess different properties and characteristics. By combining two or more co-monomers having different characteristics, an adhesive having properties that render it especially suitable for a particular application may be obtained.

### The Methylolation Reaction

The first step in the preparation of the adhesives of the preferred embodiment involves methylolation (also referred to as hydroxymethylation) of the denatured protein's polypeptide chain, along with methylolation of any of the co-monomers that do not already incorporate methylol groups. Any suitable reaction may be used to functionalize the protein or co-monomer with hydroxymethyl groups. In preferred embodiments, however, the methylolation reaction proceeds by reacting the protein or co-monomer with formaldehyde in the presence of an acid or base catalyst. The methylolation of the protein and the co-monomer(s) may be conducted simultaneously in the same reaction mixture, or may be conducted separately for each component. Methylolation of proteins and amines such as urea and melamine typically involves substitution of primary and/or secondary aminic hydrogens by hydroxymethyl groups. When the co-monomer is acetone, a methyl hydrogen is replaced by a hydroxymethyl group. Typical methylolation reactions for a polypeptide and selected co-monomers of the preferred embodiments are illustrated below.

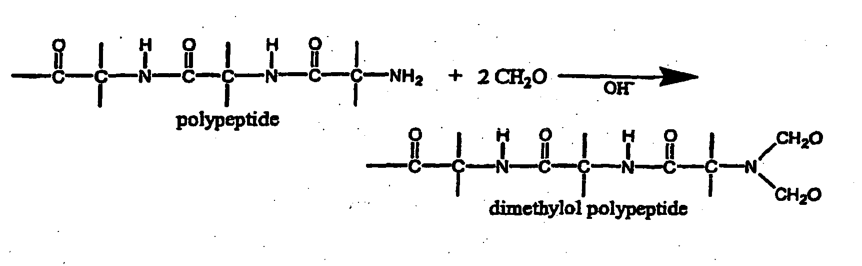

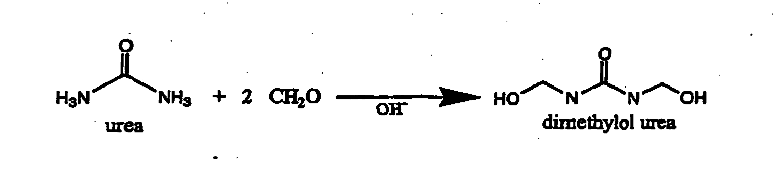

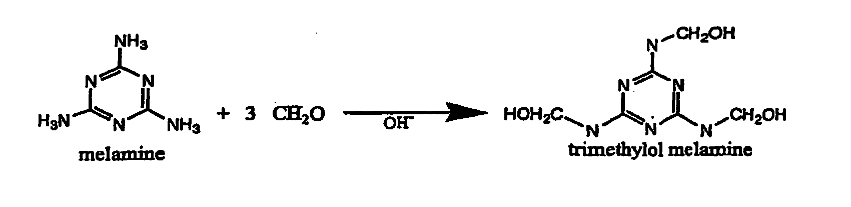

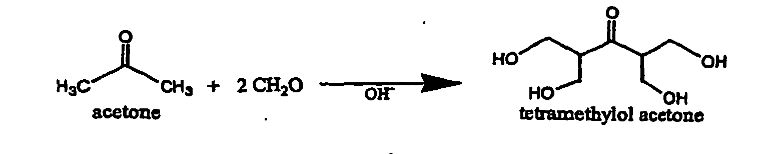

The methylolated co-monomers are commercially available and may be purchased from selected resin manufacturers. Alternatively, co-monomers that are not methylolated or are only partially methylolated may be subjected to a methylolation step as part of the process of preparing the adhesives of preferred embodiments. When methylolating the co-monomer starting material, it is preferred to conduct the methylolation at a pH of about 8.4 to about 10.5, however, in certain embodiments a higher or lower pH may be suitable. The methylolation reaction is preferably conducted at a temperature of about 32°C to about 75°C. Higher or lower temperatures may also be suitable, depending upon the reactivity of the compound to be methylolated or other factors. Reaction times of from about 20 minutes to two hours are typically sufficient to ensure complete methylolation. However, as will be appreciated by one skilled in the art, the methylolation reaction may proceed more rapidly or more slowly in certain embodiments, resulting in a shorter or longer reaction time.

Methylolation of the polypeptide chains of the soy protein and the non-methylolated or partially-methylolated co-monomer may preferably be conducted at the same time in the same reaction mixture, so as to provide a simpler process. However, the methylolation of the polypeptide chains of the soy protein may be conducted separately from that of the non-methylolated or partially-methylolated co-monomer in certain embodiments.

### Copolymerization

After methylolation of the soy protein and, if necessary, the co-monomer, the next step in the preparation of the adhesives of the preferred embodiments involves polymerization (also referred to as resinification or curing) of the protein and co-monomer molecules. One of the reactions in the polymerization process involves the condensation of a methylol group with an amine group to liberate water and form a methylene bridge. Another reaction in this process involves condensation of two methylol groups to yield an unstable ether linkage, which undergoes a reaction to liberate formaldehyde, thereby forming a methylene bridge. This free formaldehyde then reacts with the reactive amine groups of the polypeptide to form additional methylol groups. Methylol groups are also capable of condensing with non-methylolated hydroxyl groups to form unstable ether linkages.

Because each protein molecule typically contains methylol groups and groups that are reactive to methylol groups, significant crosslinking occurs. In preferred embodiments, the reaction is conducted at elevated temperature. Preferred temperatures are typically between 65°C and 110°C. However, higher or lower temperatures may be preferred in certain embodiments, as will be appreciated by one skilled in the art. Typical condensation reactions between a methylolated protein and a 2,6-methylolated urea are depicted below.

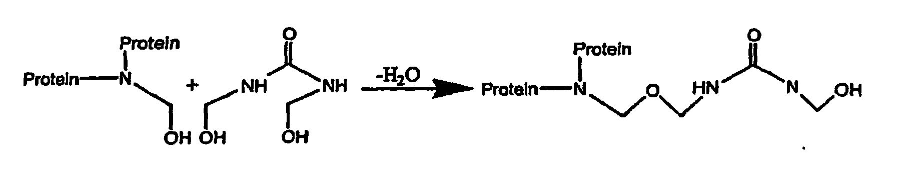

As stated above, the ether linkages formed in certain of the condensation reactions are not stable. At elevated temperatures or under acidic conditions, formaldehyde is spontaneously liberated from the linked molecules to yield a methylene bridge. The released formaldehyde may then participate in further methylolation reactions. The formation of the methylene bridge in a methylolated protein molecule coupled to methylolated urea is depicted below.

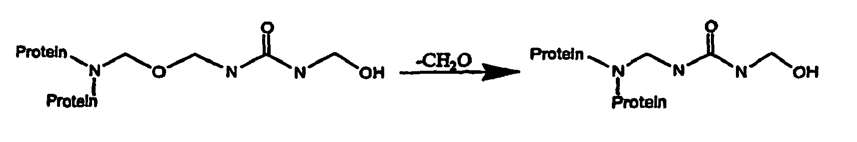

### Use of Adhesives in Composition Boards

The adhesives of preferred embodiments are suitable for use in a variety of applications, including applications where conventional resin adhesives are typically used. One particularly preferred application for the adhesives of the preferred embodiments is in the manufacture of composition boards. Composition boards prepared using the soy protein based adhesives of the preferred embodiments possess acceptable physical properties as set forth in industry standards.

The physical properties of composition boards are measured according to standards set forth by the American Society for Testing and Materials in "Standards and Methods of Evaluating the Properties of Wood-Base Fiber and Particle Panel Materials." Two of the more significant physical properties of finished composition board include modulus of elasticity and modulus of rupture under static bending conditions. Modulus of elasticity is a measure of the stiffness of the sample and is reported in pounds per square inch (psi) or Pascals (Pa). Modulus of rupture is regarded as the breaking strength of the sample and is reported in psi or Pa. In composition boards, both of these properties are determined parallel to the face of the panel. The acceptable range for modulus of rupture will vary depending upon the grade of composition board. For board having a thickness of one half inch, the modulus of rupture is preferably within the range of 1000 psi to 3000 psi, however for certain embodiments values outside of this range may also be acceptable.

Another property, tensile strength perpendicular to the surface, also referred to as internal bond, provides a measure of how well the board is glued together. The value is reported in psi or Pa. The acceptable range for internal will vary depending upon the grade of composition board. The internal bond is preferably from about 35 psi to about 100 psi for board having a thickness of one half inch. However, for certain embodiments values outside of this range may also be acceptable. This test is currently not used extensively, but should become more important as the composition board industry moves towards greater production of boards for use in structural applications.

Water resistance is evaluated by submerging a sample of board in water at room temperature for 24 hours and by submerging another sample in boiling water for 2 hours. Typically, only the 24 hour test is conducted, unless the panel is to be used in structural or construction applications. In the water resistance test, the thickness of the board is measured before and after submerging the sample in water. The thickness swell is then measured as the percent increase in thickness. Acceptable water resistance is typically indicated by a thickness swell of less than about 15%, however for certain embodiments values outside of this range may also be acceptable.

### Examples

### Adhesives Prepared from Untreated Sovmeal

Adhesives were prepared from untreated soymeal and resins including urea and formaldehyde, melamine, and formaldehyde.

### Example 1

| **Soymeal with urea and formaldehyde** | |
|---|---|
| **Component** | **Wt. (g)** |
| Soymeal (44% protein, 5-6% oil) | 200 |
| Sodium hydroxide | 16 |
| Water | 536 |
| Polyethylene glycol 400 (phase transfer catalyst) | 6 |
| Urea | 60 |
| Aqueous solution of 37 wt. % formaldehyde and 7 wt. % MeOH | 138 |
| Sodium silicate | 20 |
| Total | 976 |

The sodium hydroxide, water and polyethylene glycol were mixed together and heated to 80°C. 100 grams of the untreated soybean meal were added to the mixture, then approximately ten minutes later the remaining soybean meal was added. The soybean meal underwent hydrolysis under the basic reaction conditions. An antifoam agent and formaldehyde solution were added, after which the temperature of the mixture was approximately 62°C. The temperature was raised to 90°C over the course of approximately 30 minutes, and maintained at 90°C for approximately 20 minutes. The mixture was allowed to cool, and the pH was adjusted to 8.5 with formic acid. The percentage of solids in the mixture was 36.4%. The sodium silicate was added to the mixture, which raised the pH to 9.9. The mixture was subjected to vacuum distillation at an elevated temperature of approximately 65-67°C. After vacuum distillation, the resin had a pH of 9.8, a viscosity of 1227 cps (measured at 20 rpm, spindle #64, using a Brookfield-Model DV-E viscometer), and a solids content of 50.5%.

The resin was allowed to cure by placing it in an oven at a temperature of 110°C for 2 hours, then a 5 g sample of the cured resin was placed in 80 g of boiling water for 0.5 hours. In contrast to typical urea resins which tend to break down in boiling water and emit free formaldehyde to the atmosphere, the soymeal-urea resin was insoluble in the boiling water.

### Example 2

| **Soymeal with melamine** | |
|---|---|
| **Component** | **Wt. (g)** |
| Soymeal (44% protein, 5-6% oil) | 200 |
| Sodium hydroxide | 16 |
| Water | 536 |
| Polyethylene glycol 400 (phase transfer catalyst) | 6 |
| Melamine | 39 |
| Aqueous solution of 37 wt. % formaldehyde and 7 wt. % MeOH | 76 |
| Total | 873 |

The sodium hydroxide, water and polyethylene glycol were mixed together and heated to 80°C. 100 grams of the soybean meal was added to the mixture, eight minutes later an additional 50 grams of soybean meal was added, then four minutes later the remaining soybean meal was added. During the soybean meal addition, the mixture was heated to 105°C. The mixture was then cooled to 80°C, the melamine was added, and then the formaldehyde solution was added. The temperature of the mixture was maintained at 80°C for approximately 5 minutes, then allowed to cool to 60°C over the course of approximately 1.25 hours. The mixture was subjected to vacuum distillation at a temperature of approximately 60°C. After vacuum distillation, the resin had a pH of 12.0, a viscosity of 3180 cps (measured at 20 rpm, spindle #64, using a Brookfield-Model DV-E viscometer), and a solids content of 49.3%.

The resin was cured as in Example 1, and a 5 g sample was placed in 80 g boiling water for 0.5 hours. The soymeal-melamine resin was insoluble in the boiling water.

### Example 3 (not in accordance with the invention)

| **Soymeal with phenol and formaldehyde** | |
|---|---|
| **Component** | **Wt. (g)** |
| Soymeal (44% protein, 5-6% oil) | 200 |
| Sodium hydroxide | 16 |
| Water | 536 |
| Polyethylene glycol 460 (phase transfer catalyst) | 6 |
| Phenol (90 wt. % aq. soln.) | 94 |
| Aqueous solution of 37 wt. % formaldehyde and 7 wt. % MeOH | 175 |
| Total | 1027 |

The sodium hydroxide, water and polyethylene glycol were mixed together and heated to 80°C. 80 grams of the soybean meal were added to the mixture, an additional 40 grams of soybean meal were added, and then the remaining soybean meal was added. During the soybean meal addition, the mixture was heated to 100°C. The phenol and the formaldehyde solutions were added, after which the temperature of the mixture dropped to approximately 90-93°C. The solids content of the mixture was 33.6%. The mixture was subjected to vacuum distillation for approximately 80 minutes, yielding a mixture with solids content of 51.4 %.

The resin was cured as in Example 1, and a 5 g sample was placed in 80 g boiling water for 0.5 hours. The soymeal-phenol formaldehyde resin was insoluble in the boiling water.

### Preparation of Soy Protein Hydrolysate

Soy protein hydrolysate, rather than untreated soymeal, was used as a starting material in various adhesives of the preferred embodiments. The soybean meal was produced by the expelling/expansion method. The protein content of soybean meal produced by this method typically is from about 40 to about 48%, and the oil content from about 5 to about 11 %. The presence of the oil increases the water resistance of the resulting soybean protein adhesive.

### Reference Example 4

| **Hydrolyzed Soymeal - 0.33 wt. % Urea** | |
|---|---|
| **Component** | **Wt. (g)** |
| Soymeal (44% protein, 8.9% oil) | 400 |
| Sodium hydroxide (50 wt. % aq. soln., Van Waters & Rogers, Inc., Kirkwood, WA) | 64 |
| Water | 1040 |
| Tris(dioxa-3,6-heptyl)amine (phase transfer catalyst, Rhodia, Inc., Cranbury, NJ) | 0.04 |
| Tertiary-butylhydroquinone (TBHQ) (antioxidant, Aldrich, Milwaukee, WI) | 0.04 |
| Butylated hydroxyanisone (BHA) (antioxidant, Aldrich, Milwaukee, WI) | 0.04 |
| Urea | 5 |
| Total | 1509.1 |

The components were mixed together and heated to 140°C for 2 hours to form a solution. The pH of the resulting solution was 10.3 and the viscosity was 650 cps (measured at 20 rpm, spindle #2, using a Brookfield-Model DV-E viscometer).

### Reference Example 5

| **Hydrolyzed Soymeal - 2.0 wt. % Urea** | |
|---|---|
| **Component** | **Wt. (g)** |
| Soymeal (44 wt. % protein, 8.9 wt. % oil) | 400 |
| Sodium hydroxide (50 wt. % aq. soln.) | 64 |
| Water | 1040 |
| Tris(dioxa-3,6-heptyl)amine (phase transfer catalyst) | 0.04 |
| Tertiary-butylhydroquinone (TBHQ) (antioxidant) | 0.04 |
| Butylated hydroxyanisone (BHA) (antioxidant) | 0.04 |
| Urea | 30 |
| Total | 1534.1 |

The components were mixed together and heated to 85°C for 30 minutes to form a solution. The pH of the resulting solution was 10.3.

The antioxidants are observed to increase the solubility of the soymeal in solution. Urea is observed to decrease the water holding capacity of the protein and to decrease the viscosity of the solution. At increased urea concentrations, temperature and reaction time of the hydrolysis reaction may be decreased without significantly affecting the physical characteristics of the hydrolyzed soymeal.

The length of the polypeptide chains in the protein hydrosylate after hydrolysis of the soymeal is a function of pH, temperature, and time. Generally, the higher the pH or temperature, or the greater the length of time to which the soybean meal is subjected to hydrolysis, the shorter the polypeptide chain length. Typically, solutions including shorter, lower molecular weight polypeptide chains will have a lower viscosity. Depending upon the application in which the adhesive is used, lower or higher molecular weight polypeptide chains are preferred. For example, different molecular weights may be preferred for different panel grades of composite boards.

The above description discloses several methods and materials of the present invention. This invention is susceptible to modifications in the methods and materials, as well as alterations in the fabrication methods and equipment. Such modifications will become apparent to those skilled in the art from a consideration of this disclosure or practice of the invention disclosed herein. Consequently, it is not intended that this invention be limited to the specific embodiments disclosed herein, but that it cover all modifications and alternatives coming within the true scope of the invention as embodied in the attached claims.

## Claims

1. An adhesive, the adhesive comprising a copolymer of a denatured vegetable protein having a plurality of methylol groups and at least one co-monomer selected from the group consisting of dimethylol urea, tetramethylol ketone, and trimethylol melamine wherein the vegetable protein comprises soy protein.

2. The adhesive of claim 1, wherein the soy protein comprises hydrolyzed soy protein.

3. The adhesive of claim 1, wherein a soymeal having a protein content of from 40 wt. % to 50 wt. % and an oil content of less than 11 wt. % comprises the soy protein.

4. A composite board comprising the adhesive of any preceding claim.

5. A method of preparing an adhesive, the method comprising the steps of:
providing a denatured vegetable protein wherein the vegetable protein comprises soy protein;
functionalizing the denatured vegetable protein with a plurality of methylol groups, thereby yielding a methylolated vegetable protein;
providing a co-monomer selected from the group consisting of dimethylol urea, tetramethylol ketone, and trimethylol melamine;
preparing a solution comprising the methylolated vegetable protein and the co-monomer;
maintaining the solution at an elevated temperature, whereby the methylolated vegetable protein and the co-monomer polymerize; and
recovering an adhesive, the adhesive comprising the polymerization product of the methylolated vegetable protein and the co-monomer.

6. The method of claim 5, wherein the step of providing a denatured vegetable protein comprises a step of providing a hydrolysed soy protein.

7. The method of claim 6, wherein the step of providing a hydrolyzed vegetable protein comprises the steps of:
providing a plurality of soybeans, the soybeans comprising a soy protein;
processing the soybeans into soymeal; and
hydrolyzing the soy protein.

8. The method of claim 7, wherein the step of processing the soybeans into soymeal comprises:
subjecting the soybeans to a process selected from the group consisting of solvent extraction, extrusion, and expansion/expelling; and
recovering a soymeal.

9. The method of any of claims 5 to 8, wherein the step of denaturing the vegetable protein comprises the steps of:
forming an aqueous, alkaline solution of the vegetable protein; and
maintaining the solution at an elevated temperature, thereby producing a denatured vegetable protein.

10. The method of claim 9, wherein the step of forming an aqueous, alkaline solution of the vegetable protein comprises forming an aqueous, alkaline solution of the vegetable protein and a phase transfer catalyst.

11. The method of claim 10, wherein the phase transfer catalyst is selected from the group consisting of a polyethylene glycol, a quaternary ammonium compound, and tris(dioxa-3,6-heptyl) amine.

12. The method of claim 9, wherein the step of forming an aqueous, alkaline solution of the vegetable protein comprises forming an aqueous, alkaline solution of the vegetable protein and an antioxidant.

13. The method of claim 12, wherein the antioxidant is selected from the group consisting of tertiary butylhydroquinone and butylated hydroxyanisone.

14. The method of claim 9, wherein the step of forming an aqueous, alkaline solution of the vegetable protein comprises forming an aqueous, alkaline solution of the vegetable protein and urea.

15. The method of any of claims 5 to 14, wherein the step of functionalizing the denatured vegetable protein with a plurality of methylol groups, thereby yielding a methylolated vegetable protein comprises the reacting the denatured vegetable protein with formaldehyde in a basic solution at elevated temperature, thereby yielding a methylolated soy protein.

16. The method of any of claims 5 to 14, the step of providing a co-monomer selected from the group consisting of, dimethylol urea, tetramethylol ketone, and trimethylol melamine comprising the steps of:
providing a compound selected from the group consisting of urea, acetone, and melamine; and
reacting the compound with formaldehyde in a basic solution at elevated temperature, thereby yielding a co-monomer having a plurality of methylol groups.

17. The method of any of claims 4 to 14, wherein the step of functionalizing the denatured vegetable protein with a plurality of methylol groups and the step of providing a co-monomer having a plurality of methylol groups are conducted in a single reaction mixture.

18. The method of any of claims 5 to 17, wherein the step of maintaining the solution at an elevated temperature, whereby the methylolated vegetable protein and the co-monomer polymerize comprises maintaining the solution at an elevated temperature, whereby a methylol group of the vegetable protein and a methylol group of the co-monomer undergo a condensation reaction such that a water molecule is liberated and a reactive ether linkage is formed, the ether linkage reacting such that a formaldehyde group is liberated and a methylene bridge is formed.

19. The method of any of claims 5 to 16, wherein the step of maintaining the solution at an elevated temperature, whereby the methylolated vegetable protein and the co-monomer polymerize comprises maintaining the solution at an elevated temperature, whereby a hydroxyl group of the vegetable protein and a methylol group of the co-monomer undergo a condensation reaction such that a water molecule is liberated and a reactive ether linkage is formed, the ether linkage reacting such that a formaldehyde group is liberated and a methylene bridge is formed.

20. The method of any of claims 5 to 16, wherein the step of maintaining the solution at an elevated temperature, whereby the methylolated vegetable protein and the co-monomer polymerize comprises maintaining the solution at an elevated temperature, whereby an amine group of the vegetable protein and a methylol group of the co-monomer undergo a condensation reaction such that a water molecule is liberated and a methylene bridge is formed.

21. The method of any of claims 5 to 20, further comprising the step of:
providing a solid substance;
mixing the solid substance with the solution; and
recovering a composite.

22. The method of claim 21, wherein the composite comprises a fiber board.

23. The method of claim 21, wherein the solid substance comprises an agricultural material.

24. The method of claim 23, wherein the agricultural material is selected from the group consisting of com stalk fiber, poplar fiber, wood chips, and straw.

## Patentansprüche

1. Klebstoff umfassend ein Copolymer eines denaturierten pflanzlichen Proteins mit einer Mehrzahl von Methylolgruppen und wenigstens eines Comonomers, ausgewählt aus der Gruppe, bestehend aus Dimethylolharnstoff, Tetramethylolketon und Trimethylolmelamin, wobei das pflanzliche Protein Sojaprotein umfaßt.

2. Klebstoff nach Anspruch 1, worin das Sojaprotein hydrolysiertes Sojaprotein umfaßt.

3. Klebstoff nach Anspruch 1, worin ein Sojamehl mit einem Proteingehalt von 40 Gew.-% bis 50 Gew.-% und einem Ölgehalt von weniger als 11 Gew.-% das Sojaprotein umfaßt.

4. Verbundplatte mit dem Klebstoff nach einem der vorausgehenden Ansprüche.

5. Verfahren zur Herstellung eines Klebstoffs mit den Stufen, in denen man
ein denaturiertes pflanzliches Protein bereitstellt, wobei das pflanzliche Protein Sojaprotein umfaßt,
das denaturierte pflanzliche Protein mit mehreren Methylolgruppen funktionalisiert und dabei ein methyloliertes pflanzliches Protein bekommt,
ein Comonomer bereitstellt, welches aus der Gruppe ausgewählt ist, bestehend aus Dimethylolharnstoff, Tetramethylolketon und Trimethylolmelamin,
eine Lösung herstellt, die das methylolierte pflanzliche Protein und das Comonomer enthält,
die Lösung auf einer erhöhten Temperatur hält, wobei das methylolierte pflanzliche Protein und das Comonomer polymerisieren, und
einen Klebstoff gewinnt, wobei dieser Klebstoff das Polymerisationsprodukt des methylolierten pflanzlichen Proteins und des Comonomers ist.

6. Verfahren nach Anspruch 5, bei dem die Stufe, in der man ein denaturiertes pflanzliches Protein bereitstellt, eine Stufe umfaßt, in der man ein hydrolysiertes Sojaprotein bereitstellt.

7. Verfahren nach Anspruch 6, bei dem die Stufe, in der man ein hydrolysiertes pflanzliches Protein bereitstellt, die Stufen umfaßt, in denen man
eine Mehrzahl von Sojabohnen bereitstellt, wobei die Sojabohnen ein Sojaprotein umfassen,
die Sojabohnen zu Sojamehl verarbeitet und
das Sojaprotein hydrolysiert.

8. Verfahren nach Anspruch 7, bei dem man in der Stufe einer Verarbeitung der Sojabohnen zu Sojamehl
die Sojabohnen einem Verfahren unterzieht, das aus der Gruppe ausgewählt ist, die aus Lösungsmittelextraktion, Extrudieren und Expansion/Austreiben besteht, und
ein Sojamehl gewinnt.

9. Verfahren nach einem der Ansprüche 5 bis 8, bei dem die Stufe der Denaturierung des pflanzlichen Proteins die Stufen umfaßt, in denen man
eine wäßrige alkalische Lösung des pflanzlichen Proteins bildet und
die Lösung auf einer erhöhten Temperatur hält und dabei ein denaturiertes pflanzliches Protein produziert.

10. Verfahren nach Anspruch 9, bei dem die Stufe der Bildung einer wäßrigen alkalischen Lösung des pflanzlichen Proteins darin besteht, daß man eine wäßrige alkalische Lösung des pflanzlichen Proteins und eines Phasenüberführungskatalysators bildet.

11. Verfahren nach Anspruch 10, bei dem der PhasenüberFührungskatalysator unter einem Polyethylenglycol, einer quaternären Ammoniumverbindung und tris-(Dioxa-3,6-heptyl)-amin ausgewählt wird.

12. Verfahren nach Anspruch 9, bei dem die Stufe der Bildung einer wäßrigen alkalischen Lösung des pflanzlichen Proteins die Bildung einer wäßrigen alkalischen Lösung des pflanzlichen Proteins und eines Antioxidationsmittels umfaßt.

13. Verfahren nach Anspruch 12, bei dem das Antioxidationsmittel aus der Gruppe ausgewählt wird, die aus Tertiärbutylhydrochinon und butyliertem Hydroxyanison besteht.

14. Verfahren nach Anspruch 9, bei dem die Stufe einer Bildung einer wäßrigen alkalischen Lösung des pflanzlichen Proteins die Bildung einer wäßrigen alkalischen Lösung des pflanzlichen Proteins und Harnstoffs umfaßt.

15. Verfahren nach einem der Ansprüche 5 bis 14, bei dem die Stufe einer Funktionalisierung des denaturierten pflanzlichen Proteins mit einer Mehrzahl von Methylolgruppen unter Bildung eines methylolierten pflanzlichen Proteins die Reaktion des denaturierten pflanzlichen Proteins mit Formaldehyd in einer basischen Lösung bei erhöhter Temperatur umfaßt und dabei ein methyloliertes Sojaprotein ergibt.

16. Verfahren nach einem der Ansprüche 5 bis 14, bei dem die Stufe, in der man ein Comonomer bereitstellt, welches aus der Gruppe ausgewählt ist, bestehend aus Dimethylolharnstoff, Tetramethylketon und Trimethylolmelamin, die Stufen umfaßt, in denen man
eine Verbindung aus der Gruppe Harnstoff, Aceton und Melamin bereitstellt und
die Verbindung mit Formaldehyd in einer basischen Lösung bei erhöhter Temperatur umsetzt und dabei ein Comonomer mit einer Mehrzahl von Methylolgruppen gewinnt.

17. Verfahren nach einem der Ansprüche 4 bis 14, bei dem die Stufe einer Funktionalisierung des denaturierten pflanzlichen Proteins mit einer Mehrzahl von Methylolgruppen und die Stufe, in der man ein Comonomer mit einer Mehrzahl von Methylolgruppen bereitstellt, in einem einzigen Reaktionsgemisch durchgeführt werden.

18. Verfahren nach einem der Ansprüche 5 bis 17, bei dem die Stufe der Beibehaltung der Lösung auf einer erhöhten Temperatur, wobei das methylolierte pflanzliche Protein und das Comonomer polymerisieren, umfaßt, daß man die Lösung auf einer erhöhten Temperatur hält, wobei eine Methylolgruppe des pflanzlichen Proteins und eine Methylolgruppe des Comonomers einer Kondensationsreaktion derart unterliegen, daß ein Wassermolekül freigesetzt wird und eine reaktive Etherbindung gebildet wird, wobei die Etherbindung derart reagiert, daß eine Formaldehydgruppe freigesetzt wird und eine Methylenbrücke gebildet wird.

19. Verfahren nach einem der Ansprüche 5 bis 16, bei dem die Stufe der Beibehaltung der Lösung auf einer erhöhten Temperatur, wobei das methylolierte pflanzliche Protein und das Comonomer polymerisieren, umfaßt, daß man die Lösung auf einer erhöhten Temperatur hält, wobei eine Hydroxylgruppe des pflanzlichen Proteins und eine Methylolgruppe des Comonomers einer Kondensationsreaktion derart unterliegen, daß ein Wassermolekül freigesetzt wird und eine reaktive Etherbindung gebildet wird, wobei die Etherbindung derart reagiert, daß eine Formaldehydgruppe freigesetzt und eine Methylenbrücke gebildet wird.

20. Verfahren nach einem der Ansprüche 5 bis 16, bei dem die Stufe der Beibehaltung der Lösung auf einer erhöhten Temperatur, wobei das methylolierte pflanzliche Protein und das Comonomer polymerisieren, umfaßt, daß die Lösung auf einer erhöhten Temperatur gehalten wird, wobei eine Amingruppe des pflanzlichen Proteins und eine Methylolgruppe des Comonomers einer Kondensationsreaktion derart unterliegen, daß ein Wassermolekül freigesetzt wird und eine Methylenbrücke gebildet wird.

21. Verfahren nach einem der Ansprüche 5 bis 20 mit der zusätzlichen Stufe, in der man
eine feste Substanz bereitstellt,
die feste Substanz mit der Lösung vermischt und
einen Verbund gewinnt.

22. Verfahren nach Anspruch 21, bei dem der Verbund eine Faserplatte umfaßt.

23. Verfahren nach Anspruch 21, bei dem die feste Substanz ein landwirtschaftliches Material umfaßt.

24. Verfahren nach Anspruch 23, bei dem das landwirtschaftliche Material unter Getreidehalmfasern, Pappelfasern, Holzspänen und Stroh ausgewählt wird.

## Revendications

1. Adhésif, ledit adhésif comprenant un copolymère d'une protéine végétale dénaturée ayant une pluralité de groupes méthylol et d'au moins un comonomère choisi dans le groupe consistant en la diméthylolurée, la tétraméthylolcétone et la triméthylolmélamine, dans lequel la protéine végétale comprend la protéine de soja.

2. Adhésif suivant la revendication 1, dans lequel la protéine de soja comprend la protéine de soja hydrolysée.

3. Adhésif suivant la revendication 1, dans lequel une farine de soja ayant une teneur en protéine de 40 % en poids à 50 % en poids, et une teneur en huile inférieure à 11 % en poids comprend la protéine de soja.

4. Panneau composite comprenant l'adhésif de l'une quelconque des revendications précédentes.

5. Procédé pour la préparation d'un adhésif, ledit procédé comprenant les étapes consistant à :
fournir une protéine végétale dénaturée, la protéine végétale comprenant la protéine de soja ;
fonctionnaliser la protéine végétale dénaturée avec une pluralité de groupes méthylol, ce qui donne une protéine végétale méthylolée ;
fournir un comonomère choisi dans le groupe consistant en la diméthylolurée, la tétraméthylcétone et la triméthylolmélamine ;
préparer une solution comprenant la protéine végétale méthylolée et le comonomère ;
maintenir la solution à une température élevée, ce qui provoque la polymérisation de la protéine végétale méthylolée et du comonomère ; et
recueillir un adhésif, l'adhésif comprenant le produit de polymérisation de la protéine végétale méthylolée et du comonomère.

6. Procédé suivant la revendication 5, dans lequel l'étape consistant à fournir une protéine végétale dénaturée comprend une étape consistant à fournir une protéine de soja hydrolysée.

7. Adhésif suivant la revendication 6, dans lequel l'étape consistant à fournir une protéine végétale hydrolysée comprend les étapes consistant à :
fournir une pluralité de graines de soja, graines de soja comprenant une protéine de soja ;
transformer les graines de soja en farine de soja ; et
hydrolyser la protéine de soja.

8. Procédé suivant la revendication 7, dans lequel l'étape de transformation des graines de soja en farine de soja comprend les étapes consistant à :
soumettre les graines de soja à un procédé choisi dans le groupe consistant en l'extraction avec un solvant, l'extrusion et l'expansion/détente ; et
recueillir une farine de soja.

9. Procédé suivant l'une quelconque des revendications 5 à 8, dans lequel l'étape de dénaturation de la protéine végétale comprend les étapes consistant à :
former une solution aqueuse alcaline de la protéine végétale ; et
maintenir la solution à une température élevée, en produisant ainsi une protéine végétale dénaturée.

10. Procédé suivant la revendication 9, dans lequel l'étape de formation d'une solution aqueuse alcaline de la protéine végétale comprend la formation d'une solution aqueuse alcaline de la protéine végétale et d'un catalyseur de transfert de phase.

11. Procédé suivant la revendication 10, dans lequel le catalyseur de transfert de phase est choisi dans le groupe consistant en un polyéthylèneglycol, un composé d'ammonium quaternaire et la tris(dioxa-3,6-heptyl)amine.

12. Procédé suivant la revendication 9, dans lequel l'étape de formation d'une solution aqueuse alcaline de la protéine végétale comprend la formation d'une solution aqueuse alcaline de la protéine végétale et d'un antioxydant.

13. Procédé suivant la revendication 12, dans lequel l'antioxydant est choisi dans le groupe consistant en la tertiobutylhydroquinone et le butylhydroxyanisole.

14. Procédé suivant la revendication 9, dans lequel l'étape de formation d'une solution aqueuse alcaline de la protéine végétale comprend la formation d'une solution aqueuse alcaline de la protéine végétale et d'urée.

15. Procédé suivant l'une quelconque des revendications 5 à 14, dans lequel l'étape de fonctionnalisation de la protéine végétale dénaturée avec une pluralité de groupes méthylol, en donnant ainsi une protéine végétale méthylolée, comprend la réaction de la protéine végétale dénaturée avec du formaldéhyde dans une solution basique à une température élevée, ce qui donne une protéine de soja méthylolée.

16. Procédé suivant l'une quelconque des revendications 5 à 14, dans lequel l'étape consistant à fournir un comonomère choisi dans le groupe consistant en la diméthylolurée, la tétraméthylcétone et la triméthylolmélamine comprend les étapes consistant à :
fournir un composé choisi dans le groupe consistant en l'urée, l'acétone et la mélamine ; et
faire réagir le composé avec du formaldéhyde dans une solution basique à une température élevée, ce qui donne un comonomère ayant une pluralité de groupes méthylol.

17. Procédé suivant l'une quelconque des revendications 4 à 14, dans lequel l'étape de fonctionnalisation de la protéine végétale dénaturée avec une pluralité de groupes méthylol et l'étape consistant à fournir un comonomère ayant une pluralité de groupes méthylol sont mises en oeuvre dans un seul mélange réactionnel.

18. procédé suivant l'une quelconque des revendications 5 à 17, dans lequel l'étape de maintien de la solution à une température élevée, qui provoque la polymérisation de la protéine végétale méthylolée et du comonomère, comprend le maintien de la solution à une température élevée, ce qui fait qu'un groupe méthylol de la protéine végétale et un groupe méthylol du comonomère subissent une réaction de condensation de telle sorte qu'une molécule d'eau soit libérée et une liaison éther réactive soit formée, la liaison éther réagissant de telle sorte qu'un groupe formaldéhyde soit libéré et qu'un pont méthylène soit formé.

19. Procédé suivant l'une quelconque des revendications 5 à 16, dans lequel l'étape de maintien de la solution à une température élevée, qui provoque la polymérisation de la protéine végétale méthylolée et du comonomère, comprend le maintien de la solution à une température élevée, ce qui fait qu'un groupe hydroxyle de la protéine végétale et un groupe méthylol du comonomère subissent une réaction de condensation de telle sorte qu'une molécule d'eau soit libérée et une liaison éther réactive soit formée, la liaison éther réagissant de façon qu'un groupe formaldéhyde soit libéré et un pont méthylène soit formé.

20. Procédé suivant l'une quelconque des revendications 5 à 16, dans lequel l'étape de maintien de la solution à une température élevée, qui provoque la polymérisation de la protéine végétale méthylolée et du comonomère, comprend le maintien de la solution à une température élevée, ce qui fait qu'un groupe amine de la protéine végétale et un groupe méthylol du comonomère subissent une réaction de condensation de façon qu'une molécule d'eau soit libérée et un pont méthylène soit formé.

21. Procédé suivant l'une quelconque des revendications 5 à 20, comprenant en outre l'étape consistant à :
fournir une substance solide ;
mélanger la substance solide à la solution ; et
recueillir un composite.

22. Procédé suivant la revendication 21, dans lequel le composite comprend un panneau de fibres.

23. Procédé suivant la revendication 21, dans lequel la substance solide comprend une matière agricole.

24. Procédé suivant la revendication 23, dans lequel la matière agricole est choisie dans le groupe consistant en fibres de tiges de maïs, fibres de peuplier, copeaux de bois et sciure.
